# EUROPEAN PATENT SPECIFICATION

(11) **EP 2 269 019 B1**
(45) Date of publication and mention of the grant of the patent: **21.08.2013**
(21) Application number: 08737260.3
(22) Date of filing: 08.05.2008
(51) Int. Cl.: G01K 17/00, G01K 17/20, F24D 19/10

(54) **CALCULATING HEAT FLOWS FOR A HABITABLE ROOM**
BERECHNUNG VON WÄRMFLÜSSEN FÜR EINEN BEWOHNBAREN RAUM
CALCULER LES FLUX DE CHALEUR D'UNE PIÈCE HABITABLE

(30) Priority: 08.05.2007 GB 0708793; 24.08.2007 GB 0716525
(43) Date of publication of application: 05.01.2011
(73) Proprietor: Gekko Tools Ltd, Leicestershire LE1 5WN (GB)
(72) Inventor: PARKER, Philip, Leicester Leicestershire LE2 6HX (GB)
(74) Representative: Leaman, Keith
(86) International application number: PCT/GB2008/050336
(87) International publication number: WO 2008/135794

(56) References cited:
- AU-B3- 727 076
- US-A- 6 167 388

## Description

This invention relates to a tool for calculating the heat loss or heat gain through the fabric of a habitable room and for calculating energy efficiency of a building.

With the accent on ensuring a lower carbon emissions, and the fact that the price of fuel is rising, there are incentives to improve the specification, the installation of proper heating or air conditioning equipment for housing and other habitable rooms, and the energy efficiency of the building.

Dealing firstly with heating systems, with new house constructions, the architect will specify particular sizes of radiators for central heating systems to achieve a given level of comfort within a room. The specification takes into account the heat losses through heat transfer through external walls, ceilings, floors and heat loss due to ventilation of the room. In these instances, the plumber installing the heating equipment is told what size radiators to use and where to locate them.

With existing housing, where there is a need to replace central heating system boilers or radiators, or where rooms have been added to an existing house, quite often the installer of a new boiler or new radiators will guess at the size of the boiler or the size of a radiator required for a given room. More often than not, the size of the radiator will be much too large for the room, or a larger boiler may be fitted than is necessary. Clearly, this results in the homeowner or occupier, spending more money on fuel and creating more carbon monoxide emissions than necessary.

Heat loss from a room, (or heat gain) occurs in many ways, but the most significant is the heat transfer through the fabric of the building (i.e. through the walls, floor, windows, and ceiling), and that transferred through natural or forced ventilation of the rooms.

Where a temperature difference occurs across the fabric of the structure of a room, heat will flow through the structure towards the lower of the temperatures. It is important to know how much heat is transferred through each structure so that calculations can be made to heat or cool a building to the desired temperature. The transfer of heat is calculated using 'U' values together with the surface areas of the various structural components and the temperature difference between the two sides of the structure concerned. Tables of pre calculated "U" Values, are published by British Standards Institute (See BS5449 1990) and in the UK are provided by the Building Regulations Authority.

For ease of calculation, it is assumed that heat is transferred at a uniform rate through each surface. The 'U' value of a building component is the rate of loss of transfer in watts per square metre of that element per degree centigrade temperature difference across that structure. Thus, the rate of heat lost (Q) or gained through a building structure is give by the equation :-

Q (Watts) = U x Area (m²) x Temperature difference across the structure (C°). In the United Kingdom for heating calculations, the temperature outside of the property is normally taken as -1°C, which is supposed to represent the normal lowest winter temperature.

In the United Kingdom, the requirements for the provision of ventilation in dwellings detailed in the Building Control Regulations are designed to restrict the build up of moisture and pollutants, which would otherwise be a hazard to health. This ventilation air, flowing through the building, loses heat from the room. Ventilation rates are usually quoted as 'air changes per hour'. This is defined as the volume of ventilation air moving through the room per hour, divided by the volume of the room itself. The air is heated by the heat source in the room, and the heat needed is calculated by multiplying the room volume, by the air change rate, by the temperature rise that the air needs and by the "ventilation factor". In the UK the "ventilation factor" is taken as the specific heat of air at 200C. This is = 0.33 W / m3 °C, and is used to calculate the heat transfer due to the air changing within the rooms as a result of infiltration exfiltration, or mechanical ventilation.

Thus, ventilation heat loss = room volume (m³) x rate of air change x Temperature Difference (C°) x Ventilation Factor (w/m³ °C).

The following internal design temperatures and air change rates are recommended for the design of full and part central heating systems and are based on providing the customer with acceptable comfort levels throughout.

The minimum design temperature and air change rates for the design of full and part central heating systems, (based on providing the customer with acceptable comfort levels throughout the room) are recommended by British Standards BS 5449: 1990 and are set out in the table 1 below.

In 2006, the British Government announced a compulsory energy rating scheme for homes in accordance with the European Union Regulations 2002/91/EC and 2006/12/EC. This scheme came into effect in the UK in August 2007 for many types of buildings. Under that scheme, Individual assessors visit all homes that come up for sale and measure the room sizes and calculate the energy efficiency of the dwelling, and calculate the potential efficiency if certain modifications are made, and issues a certificate or report. The report is referred to as a SAP (Standard Assessment Procedure) certificate. There is also a reduced data SAP which is referred to as RdSAP. A RdSAP report makes certain assumptions based on the year of construction of the building, and the building regulations that were applied at the time of original construction.

SAP reports also form part of compulsory "Home Information Packs" (HIP) introduced into the UK in 2007 that must be provided by each seller of a house to the potential buyers of the house. One of the problems encountered in the UK in implementing the production of HIP reports is that it has been necessary to train many hundreds if not thousands of persons to carry out the necessary surveys. The training is very expensive and there is a shortage of trained personnel. The implementation of the scheme has been delayed because of insufficient properly qualified personnel to cary out the surveys.

One will appreciate that the calculation of heat loss is extremely complicated and normally beyond the knowledge of personnel being trained to carry out SAP assessments and beyond many semiskilled plumbers. Therefore, there is a need for a tool that is portable so that a person can readily measure the dimensions of a specified room on site and simply from that determine the heating loss (or heat gain) for a specified room, without that person having to know how to calculate the heat loss or gain. US 6, 167, 388 describes a system and method for the selection of heating equipment. Information about the room to be heated is inputted by the user.

An object of the present invention is to provide a tool that is readily portable, easy-to-use and capable of calculating the required heat output of a heating device for a particular habitable room, having regard to the possible sources of heat loss for that room.

A further object of the present invention is to provide a tool that is readily portable, easy-to-use and capable of calculating the heat loss or gain for a particular habitable room, having regard to the possible sources of heat loss for that room.

A further object of the present invention is to provide such a tool with means for producing and printing out an auditable an energy efficiency report.

According to the present invention there is provided a portable self-contained tool as defined in claim 1.

Preferably, the microprocessor is further pre-programmed with
(e) A "Ventilation Factor" = 0.33 Watts/m³ °C ; and,
(f) Typical "air changes" for the different types of rooms set out in (a) of claim 1.

Preferably, the distance-measuring device is an integral part of the casing of the tool, or alternatively, it may be detachable from the casing of the tool whilst remaining coupled to the microprocessor.

The distance-measuring device may be connected to the microprocessor by means of a cable or it could be hardwired to a circuit board of the microprocessor. Alternatively, the distance-measuring device may be connected to the microprocessor by means of a wireless communication link.

Preferably, the distance- measuring device is one that uses an ultrasonic beam for measuring distance and is operable to produce an output signal indicative of linear measurements. Alternatively, the distance-measuring device is one that uses an infra-red beam for measuring distance and is operable to produce an output signal indicative of linear measurements.

Preferably, the distance- measuring device includes a laser generator one that uses an laser beam for pointing at the same surface at which the beam that is used for measuring distances is directed.

The distance-measuring device could be one that uses a laser beam for measuring distance and is operable to produce an output signal indicative of linear measurements.

Preferably, the microprocessor includes means for formatting data into a report format. In the case where the tool is used to produce energy efficiency reports the format of the report shows the energy efficiency of the building.

The tool may be provided with an output port for connecting a lead to a computer or printer for printing the report. Preferably, the port is a USB port.

The tool may be provided with a camera of the sort incorporated in mobile telephones and the images taken by the camera are stored in the memory of the microprocessor and can be printed by a printer connected to the USB printer port.

The present invention will now be described, by way of example, with reference to the following drawings in which:-
Figure 1 illustrates schematically, a handheld tool constructed in accordance with the present invention;
Figure 2 illustrates schematically, a block diagram of the main components of the tool of figure 1, and,
Figure 3 illustrates schematically a process flow chart for calculating the heating requirements for a specified room of a dwelling.

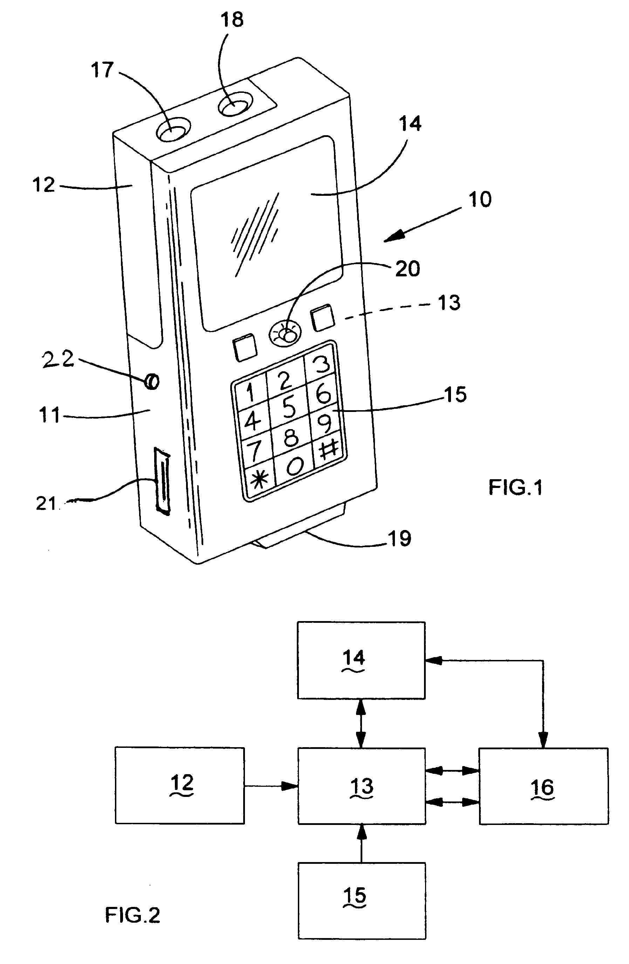

Referring to Figure 1 and 2 the tool 10 according to the present invention is a hand held tool approximately the size of a conventional mobile telephone. The tool 10 has an outer casing 11 that incorporates an integral ultrasonic distance-measuring device 12 and a microprocessor or computer 13, that has a memory, a display screen 14, and a key pad 15 (or touch pad or joystick).
Although the display screen is shown in "portrait" it is to be understood that the screen may be rotated through 90° to that shown so that the image is displayed in "landscape". Preferably, the measuring device 12 is hardwired to the microprocessor circuit board; although it could be connected to the microprocessor by way of a cable connection or other interface connection.

The distance measuring device 12 uses an ultrasonic beam to measure distances between the tool 10 and a surface (such as, for example, a wall or ceiling) at which the ultrasonic beam is directed. The ultrasonic beam is directed through a transmitter / receiver port 17. The distance-measuring device produces an output signal that is indicative of linear measurements, and this output signal is input directly into the microprocessor.

The measuring device 12 includes a laser-pointing device 16 that is used to project a visible low power laser beam onto a surface at which the ultrasonic beam of the measuring device 12 is directed. The measuring device 12 has an output directly connected to an input of the microprocessor or computer 13 so that linear dimensions measured by the measuring device 12 are inputted into the memory of the microprocessor. The integration of the measuring device directly into the device is considered essential because this eliminates human errors due to miss-measuring, writing down the wrong dimensions or conversion of metric and imperial values.
The main components of the tool 10 are shown schematically in Figure 2.

The microprocessor 13 is pre-programmed to store the following data in its memory:-
(a) A predetermined list of room types as published by the British Standards Institute (or other regulatory or advisory body). Examples are shown in Table 1 hereof;
(b) Typical "air changes" for the different types of rooms set out in (a) above as recommended by the British Standards Institute (or other regulatory or advisory Body). Examples of typical air changes are shown in Table 1 hereof;
(c) A predetermined range of the types of building materials used in the construction of the walls, floors, ceilings, roofs and other elements of a room of a dwelling. Examples of these are given in Table 2 hereof;
(d) Typical "U" values of the materials set out in (b) as published by the British Standards Institute (or other regulatory or advisory bodies). Examples are shown in Table 3 hereof;
(e) The "Ventilation Factor" (0.33 W / m3 °C) as published by the British Standards Institute (or other regulatory or advisory body), and,
(f) Predefined temperature gradient values for the temperature gradient across the fabric of the structure of the room.

The microprocessor 13 may be programmed so as to format the data into a report format that can be displayed on the screen 14, stored in the memory, or downloaded via a USB port 21 to an external computer (not shown) or to printer (not shown) connected to the USB port 21 to enable the report to be printed. This facility is particularly useful when the tool 10 is to be used for calculating the energy efficiency of a building as explained below, so that the data can be collated and printed in the form of an energy efficiency certificate or a report.

It has found to be useful to provide the tool with a reference beam of visible light at right angles to the principal measuring axis of the tool. A light source (which may be a laser light or an incandescent light bulb or LED light) is shown schematically in Figure 1 by the reference numeral 22. The beam of light projected from the light source 22 is useful when using the tool to measure into a bay window from the main room in a direction towards the bay window. The light beam from the light source 22 can be used to position the tool in line with the walls of the room at each side of the bay window so that the depth of the bay can be measured more accurately.

The tool may also be provided with a camera so that a picture of the building to which an energy efficiency certificate or report relates can be stored or printed as part of an energy efficiency certificate or report.

The temperature difference parameters should not be thought of as just between the inside of a property and the outside temperature; the differences between adjacent internal rooms should also be considered. In the UK, the recognised temperatures for domestic rooms are given in table 1. From this, one can calculate the typical temperature gradient for each type of room. In the UK, for heating calculations, the temperature outside of the property is normally taken as -1°C; this is supposed to represent the normal lowest winter temperature. In the UK, the temperature gradient across a party wall (a wall between two properties) is taken as 10°C.

**Table 1**

| **Room** | **Temp** | **No of Air Changes** |
|---|---|---|
| Lounge Sitting Room | 21 | 1.5 |
| Living Room | 21 | 1.5 |
| Dining Room | 21 | 1.5 |
| Kitchen | 18 | 2.0 |
| Kitchen / Breakfast | 21 | 2.0 |
| Breakfast Room | 21 | 2.0 |
| Hall | 18 | 2.0 |
| Cloak Room | 18 | 2.0 |
| Toilet | 18 | 2.0 |
| Dressing Room | 21 | 1.5 |
| Utility Room | 18 | 1.5 |
| Study | 21 | 1.5 |
| Games Room | 21 | 1.5 |
| Bedroom | 18 | 1.0 |
| Bedroom en suite | 18 | 2.0 |
| Bed-sitting room | 21 | 1.5 |
| Bedroom / Study | 21 | 1.5 |
| Landing | 18 | 2.0 |
| Bathroom | 22 | 2.0 |
| Store Room | 16 | 1.0 |

The categories of materials used for floors, walls, windows and ceilings are set out in a menu displayed on the screen 14. From the displayed menu, the worker can highlight and select the appropriate choice of materials for each structure.

The following table sets out examples of choices available and gives examples of the "U" values stored in the look-up tables.

**Table 2**

| **Structure** | **Material/construction** | **"U" value** |
|---|---|---|
| Wall (outer) | 9" solid brick | 2.2 |
| | 11" brick-block cavity - unfilled | 1.0 |
| | 11" brick-block cavity - insulated | 0.6 |
| Wall (internal) | plaster, 4.5 inch brick, plaster | 2.2 |
| | plaster, 4 inch heavyweight block, plaster | 2.5 |
| | plaster, 4 inch lightweight block, plaster | 1.2 |
| | plasterboard, 4 inch studding, plasterboard | 1.8 |
| Party Wall | Solid brick plaster rendered both sides | 2.2 |
| Floor (Ground) | solid concrete | 0.8 |
| | suspended - timber | 0.7 |
| Floors (Intermediate) | Plasterboard/ 8 inch joist space/ T&g boards - heat flow up | 1.7 |
| | Plasterboard/ 8 inch joist space/ T&g boards - heat flow down | 1.4 |
| Roof | pitched with felt, 50mm insulation | 0.6 |
| | pitched with felt, 100mm insulation | 0.3 |
| | flat, 25mm insulation | 0.9 |
| | flat, 50mm insulation | 0.7 |
| Window | wooden/upvc frame, single glazed | 5.0 |
| (the post April 2002 BS standard) | wooden/upvc frame, double glazed | 2.9 |
| | wooden/upvc frame, double glazed - 20mm gap, Low-E metal frame, single glazed | 1.7 |
| | | 5.8 |
| Door | external solid timber | 2.4 |
| | external glazed door (treat as glazing) | |
| | Internal door (treat same as the wall) | |

Preferably the microprocessor has means for formatting the data into a report format that can be displayed on the screen or output to a computer or printer through a USB port so that the report can be printed.

In a further modification of the tool (not shown) the tool may incorporate a camera of the type used on mobile telephones so that a picture of the building to which the data relates, can be displayed on the screen, stored in the memory, or printed by a printer connected to the USB port.

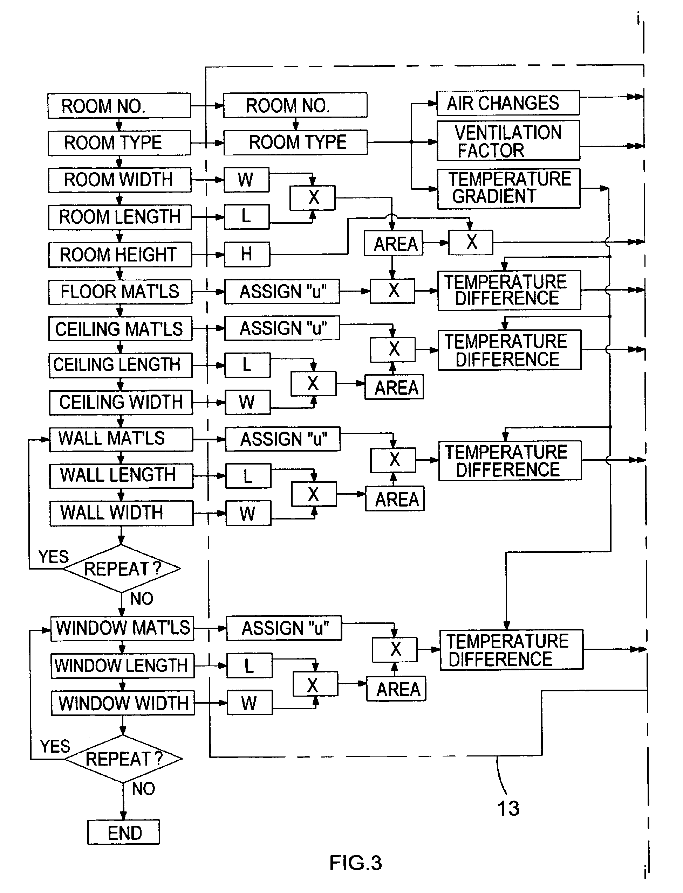

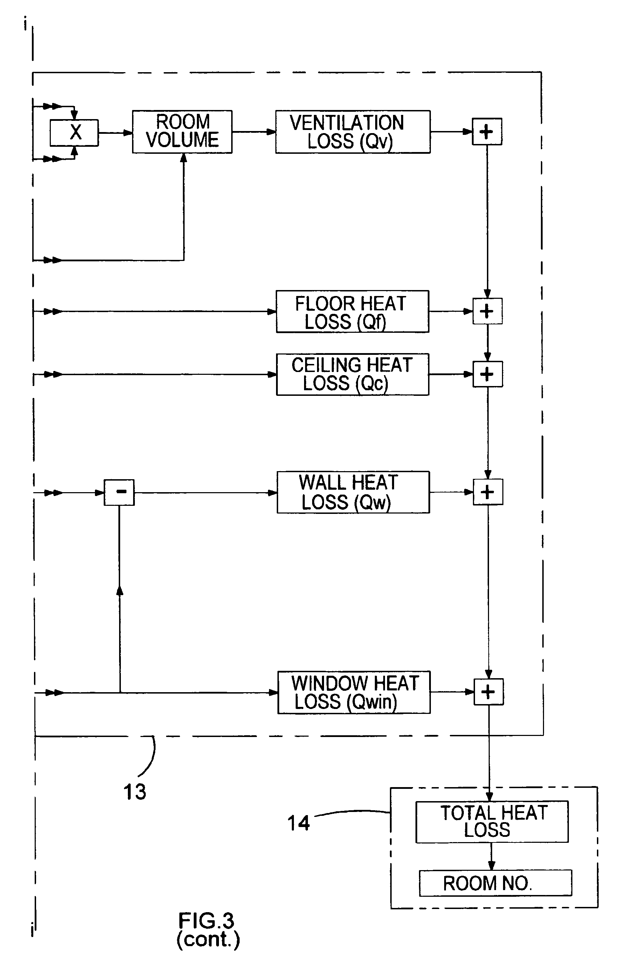

The operation of the tool 10 for determining the required heat output of a heat source for the room (such as, for example, a central heating radiator, warm air blower, radiant heater, gas fire, convector heater, or air conditioning unit) or for calculating heat loss through the fabric of the room is illustrated schematically by the flow chart shown in Figure 3.

For simplicity, it is assumed that the room is a rectangular lounge room measuring 3m X 4m X 2.7 m high, with two external walls (cavity wall with insulated cavity) and a double glazed window of 2m² in each external wall. The area of the floor and ceiling are assumed the same. It is to be understood that the principle of operation of the tool is the same for rooms of different shapes.

Clearly it would be advantages to store preset equations in the memory of the microprocessor so that preset geometric areas (e.g. triangular shapes, circular shapes and so on) could be calculated easily without the worker needing to know the exact equation to calculate the area.

In figure 3, the steps carried out by the microprocessor are shown by the boxes contained within the dotted line 13; the data input by the worker is shown at the left side of the diagram. The worker is presented with a menu driven display and effectively selects each data item from predetermined list of possible choices.

Firstly, the name of the room is entered into the memory of the microprocessor13 by selecting the type of room from a displayed list corresponding to table 1 mentioned above so that the data can be related to a specific room.

The tool 10 is used to direct the ultrasonic beam and laser beam of the measuring device 12 at a selected wall of the room by the worker and the end 19 of the tool 10 is held against an opposing wall to measure the distance between the end 19 of the tool and the respective wall of the room. The distance between the selected wall and the opposing wall is measured, and input into the microprocessor's memory directly from the measuring device 12. This is repeated in order to measure the length and width of the floor of the room.

If appropriate, other linear measurements are made between opposing walls for irregular shaped rooms in order to be able to calculate the area of the floor of the room (and also the area of the ceiling where appropriate). The areas of the floor and ceiling are calculated by the microprocessor, and this used to calculate heat transfer through the floor and ceiling as explained later.

Next, the height of the room is measured with the measuring device 12 by the worker holding the end 19 of the tool against the floor and directing the ultrasonic beam at the ceiling of the room. The height of the room is entered into the memory of the microprocessor 13. From the linear dimensions of the room, the volume of the room is calculated by the microprocessor 13 and stored in the memory. The room volume is used to calculate the heating requirement for the room when all the details of the construction of the room is entered. The volume of the room is also used to calculate the ventilation heat loss for the room, as will be explained hereinafter later.

The worker uses the keypad 15 and joystick 19 to navigate a menu displayed on the screen 14 that sets out a list of the common materials used in the construction of buildings as set out in table 1 mentioned above.

The worker highlights and selects the most appropriate material for the floor from the displayed list that matches that of the room, and this is inputted directly to the memory of the microprocessor from which the appropriate "U" value for the selected material is assigned from the look-up tables corresponding to tables 1 and 2 in the microprocessor memory.

This material selection process is repeated for selecting the appropriate materials for the walls, ceiling and windows of the room. Thus, the worker does not need to know what the "U" values are; this is automatically assigned by the microprocessor from look-up tables linking "U" values to pre-selected choices of materials.

The distance-measuring device 12 is used to measure the length and height of each external wall, and these linear dimensions are inputted directly into the microprocessor's memory. The microprocessor 13 calculates the gross area of the, or each, external wall from the linear dimensions. Next the distance-measuring device 12 is used to measure the length and height of windows in each external wall and the linear dimensions are inputted to the microprocessor memory. The microprocessor calculates the area of the, or each, window and this is stored in the memory.

The areas of the windows are used to calculate the heat transfer through the fabric of the windows. In addition, the area of the, or each, window is subtracted from the gross area of the respective wall to give the actual area (or net area) of the respective external wall to enable the heat transfer through the fabric of the external walls to be calculated.

As explained above, the 'U Value' of the materials of the structure of a room is the rate of heat transfer in watts per square meter of that structure per degree centigrade temperature difference across that element. The microprocessor 13 calculates the heat transfer for the respective wall, floor, window, or ceiling structure of the room by multiplying the corresponding "U" value by the area (m²) of the respective wall, floor, window, or ceiling element. The microprocessor then multiplies the product of this calculation by the stored value of the recommended temperature difference (C°).derived from table 1.

The total heat transferred through the fabric of each of the structures of the room is stored in the microprocessor memory as a subtotal. The total heat transferred through all of the structures is the sum of the individual subtotal values.

Ventilation heat loss is calculated by the microprocessor 13 by multiplying the room volume (as stored in the microprocessor memory), by the rate of air change for the specific room as derived from the look-up tables in the memory corresponding to table 1. The product of this calculation is then multiplied by the temperature rise the air needs as recommended in the British Standards Specification (or other Regulatory or advisory body)). This temperature gradient is derived from the look-up tables in the memory corresponding to table 1 mentioned above. The product of this calculation is further multiplied by the "ventilation factor" value for the specific type of room that is stored in the look up table in the microprocessor memory corresponding to table 1 mentioned above.

The ventilation heat loss and the heat transferred through the fabric of the room is added to the total heat required to maintain a predetermined level of heating of the room (as set out in the BS5449 1990 and shown in table 1) to give the recommended value of the total heat output required from the heating radiator for the specified room. This total heating requirement for each room is stored in the memory of the microprocessor 13 to enable the total heating requirement of all the rooms of the dwelling to be obtained.

It will be appreciated that the calculations have to be repeated for all the rooms that require the heating requirements to be calculated. Similarly, if one wishes to establish the total heat output from a boiler or other form of heater for the whole dwelling, calculations need to be done for all the rooms to be heated.

Although the total calculations are many and complex, this task is carried out automatically by the microprocessor 13 without the worker needing to understand the exact calculations required. All the worker on site has to do is measure the linear dimensions of the room, the external walls and the windows, and select from the preset choices of building materials the appropriate materials that match the specific room. The heating output required from each radiator is then automatically calculated by the microprocessor and displayed. This enables the correct radiators and boilers to be installed in the dwelling without any specialist knowledge and reduces the use of radiators and boilers that are too large for a given dwelling.

For the room mentioned above, the total heat loss would be calculated as follows:-
Floor area = 12m²; Room volume = 32.4m³;
Gross area First external wall = 10.8m²; Second external wall = 8.1 m²;
Window area = 2 x 2m² = 4m²;
Net wall area = 10.8 + 8.1 - 4.0 = 14.9 m²
Heat transferred through walls (Q) = "U" x Area (m²) x Temperature difference across the structure (C°).
Walls Q_{w} = 1.0 x 14.9 x 21 = 312.9 Watts
Windows Q_{win} = 2.9 x 4 x 21 = 243.6 Watts
Floor Q_{f} = 0.7 x 12 x 21 = 176.4Watts
Ceiling Q_{c} = 1.7 x 12 x 21 = 428.4 Watts
Ventilation Qᵥ = Vol x Air Changes x Temperature x Ventilation Factor Qᵥ = 32.4 x 1.5 x 21 x 0.33 = 336.8 Watts
Total heat loss = Q_{w} + Q_{win} + Q_{f} + Q_{c} + Qᵥ
Total Q = 312.9 + 243.6 + 176.4 + 428.4 +336.8 = 1.498 Kw

In the above example, no account was taken of heat transfer from the specified room through internal walls to adjacent rooms that may be at lower temperature. If it is desired to take such heat transfer into account, then it would be necessary to store details of typical materials and construction of internal walls and corresponding "U" values and also values of typical temperature gradients across internal wall structures.

The above embodiment described in connection with the flow diagram of Figure 3 is for calculating the heating requirements of a room. It is to be understood that the tool 10 could be used in determining the air conditioning requirements of a room. In this case, heat transfer will of course still flow from the hotter side to the cooler side of the structure of the room, so the calculations using the "U" values still apply.

In the case of air conditioning calculations, additional data related to the local climate and the position or location of the dwelling is required and needs to be pre-programmed and stored in the memory of the microprocessor. This additional data would include the direction in which the external walls face (i.e. whether the wall faces north, south, east or west), the direction of prevailing winds and the likely effect, whether the room is on elevated floors of an apartment block, whether the external walls are in direct sunlight, and so on. The local climate parameters could be selected from pre programmed lists.

Although the distance-measuring device 12 is preferably an ultrasonic transmitter receiver type, the distance-measuring device 12 device could be a laser device that directs and receives a laser beam though a lens. Other types of distance measuring devices could also be used. For example, the distance-measuring device could use an infrared beam.

It is preferred that the output of the distance-measuring device 12 is connected directly to an input of the computer. This may be achieved by hardwiring the device to the circuit board of the microprocessor or by way of a cable link such as a USB cable or other cable to a measuring device that is detachably mounted on the tool 10.

It may also be possible to transmit the output data indicative of linear dimensions from a detachable (or non-detachable) distance-measuring device 12 to the microprocessor by way of a wireless link an infrared link or by Blue tooth communication link.

In the case where the tool is used to calculate the home efficiency of a home, the following additional data is required:-
(a) The Age of building
(b) The method of heating and the type of controls (e.g. whether thermostatic radiator valves are fitted, what type of heating, whether a thermostat is fitted to a hot water storage tank and so on).
(c) The fixed lighting efficiency (whether low wattage energy efficient light bulbs are used).
(d) Use of renewable sources (solar panels, wind power generators)
(e) Location of the building.

This additional data is entered and stored in the memory of the microprocessor.

From the data a value for the present energy efficiency (and potential efficiencies) is formatted into a report or certificate format that can be printed by a printer connected at the USB printer port. In SAP reports, a home's performance is rated in terms of the energy use per square metre of floor area, energy efficiency based on fuel costs, and environmental impact based on carbon dioxide emissions.

## Claims

1. A portable self-contained tool for determining the heating or cooling requirements of a specified room in a dwelling or other building, the tool comprising the combination of a distance-measuring device for producing output signal indicative of linear measurements and a microprocessor comprising a display screen, a key pad and a memory that is pre programmed with:
(a) A predetermined list of room types;
(b) A predetermined selection of the types of building materials used in the construction of the walls, floors, ceilings, roofs or other elements of a room of a dwelling or other building;
(c) Predefined temperature gradient values for different room types; and
(d) Typical "U" values of the materials set out in (b),
wherein the tool is configured to input the output signal from the distance-measuring device directly into the memory of the microprocessor.

2. A tool according to claim 1 wherein the microprocessor is further pre-programmed with
(a) A "Ventilation Factor" = 0.33 Watts/m³ °C ; and,
(b) Typical "air changes" for the different types of rooms set out in (a) of claim 1.

3. A tool according to claim 1 or claim 2 wherein the distance-measuring device is integral with the microprocessor.

4. A tool according to claim 1 or claim 2 wherein the distance-measuring device is detachable from the microprocessor.

5. A tool according to any one of claims 1 to 4 wherein the distance measuring device is connected to the microprocessor by means of a cable.

6. A tool according to any one of claims 1 to 4 wherein the distance-measuring device is hardwired to a circuit board of the microprocessor.

7. A tool according to any one of claims 1 to 4 wherein the distance-measuring device is connected to the microprocessor by means of a wireless communication link.

8. A tool according to any one of claims 1 to 7 wherein the distance- measuring device is one that uses an ultrasonic beam for measuring distance and is operable to produce an output signal indicative of linear measurements.

9. A tool according to any one of claims 1 to 7 wherein the distance- measuring device is one that uses an infra-red beam for measuring distance and is operable to produce an output signal indicative of linear measurements.

10. A tool according to any one of claims 1 to 9 wherein the distance- measuring device includes a laser generator one that uses a laser beam for pointing at a surface at which the beam that is used for measuring distances is directed.

11. A tool according to any one of claims 1 to 7 wherein the distance- measuring device is one that uses a laser beam for measuring distance and is operable to produce an output signal indicative of linear measurements.

12. A tool according to any one of the preceding claims wherein the microprocessor includes means for formatting data into a report format.

13. A tool according to claim 12 wherein the format of the report shows the energy efficiency of the building.

14. A tool according to claim 12 or claim 13 wherein the tool has an output port for connecting a lead to a computer or printer for printing the report.

15. A tool according to any one of the preceding claims wherein a camera is provided.

## Patentansprüche

1. Tragbares, in sich selbst geschlossenes Gerät zum Bestimmen des Wärme- oder Kühlbedarfs eines bestimmten Raums in einer Wohnung oder einem anderen Gebäude, wobei das Gerät die Kombination aus einer Abstandsmessvorrichtung, um ein lineare Messwerte angebendes Ausgangssignal zu erzeugen, und einen Mikroprozessor umfasst, umfassend einen Anzeigebildschirm, eine Tastatur und einen Speicher, der vorprogrammiert ist mit:
(a) einer vorbestimmten Liste von Raumarten;
(b) einer vorbestimmten Auswahl der Arten von Baumaterialien, die beim Bau der Wände, Böden, Decken, Dächer oder anderer Elemente eines Raums einer Wohnung oder eines anderen Gebäudes verwendet werden;
(c) vordefinierten Temperaturgradientenwerten für verschiedene Raumarten; und
(d) typischen "U"-Werten der in (b) aufgeführten Materialien,
wobei das Gerät dazu ausgelegt ist, das Ausgangssignal aus der Abstandsmessvorrichtung direkt in den Speicher des Mikroprozessors einzugeben.

2. Gerät nach Anspruch 1, wobei der Mikroprozessor darüber hinaus vorprogrammiert ist mit:
(a) einen "Belüftungsfaktor" = 0,33 Watt/m³ °C; und
(b) typischen "Luftwechseln" für die verschiedenen in (a) von Anspruch 1 aufgeführten Arten von Räumen.

3. Gerät nach Anspruch 1 oder Anspruch 2, wobei die Abstandsmessvorrichtung einstückig mit dem Mikroprozessor ausgebildet ist.

4. Gerät nach Anspruch 1 oder Anspruch 2, wobei die Abstandsmessvorrichtung vom Mikroprozessor abnehmbar ist.

5. Gerät nach einem der Ansprüche 1 bis 4, wobei die Abstandsmessvorrichtung mittels eines Kabels an den Mikroprozessor angeschlossen ist.

6. Gerät nach einem der Ansprüche 1 bis 4, wobei die Abstandsmessvorrichtung festverdrahtet an eine Leiterplatte des Mikroprozessors angeschlossen ist.

7. Gerät nach einem der Ansprüche 1 bis 4, wobei die Abstandsmessvorrichtung mittels einer drahtlosen Kommunikationsverbindung mit dem Mikroprozessor verbunden ist.

8. Gerät nach einem der Ansprüche 1 bis 7, wobei es sich bei der
Abstandsmessvorrichtung um eine Abstandsmessvorrichtung handelt, die sich eines Ultraschallstrahls zur Abstandsmessung bedient und funktionsfähig ist, ein lineare Messwerte angebendes Ausgangssignal zu erzeugen.

9. Gerät nach einem der Ansprüche 1 bis 7, wobei es sich bei der
Abstandsmessvorrichtung um eine Abstandsmessvorrichtung handelt, die sich eines Infrarotstrahls zur Abstandsmessung bedient und funktionsfähig ist, ein lineare Messwerte angebendes Ausgangssignal zu erzeugen.

10. Gerät nach einem der Ansprüche 1 bis 9, wobei die Abstandsmessvorrichtung einen Lasergenerator umfasst, der sich eines Laserstrahls bedient, um auf eine Fläche zu zeigen, auf die der Strahl gerichtet wird, der zur Abstandsmessung verwendet wird.

11. Gerät nach einem der Ansprüche 1 bis 7, wobei es sich bei der
Abstandsmessvorrichtung um eine Abstandsmessvorrichtung handelt, die sich eines Laserstrahls zur Abstandsmessung bedient und funktionsfähig ist, ein lineare Messwerte angebendes Ausgangssignal zu erzeugen.

12. Gerät nach einem der vorhergehenden Ansprüche, wobei der Mikroprozessor Mittel zum Formatieren von Daten in ein Berichtsformat umfasst.

13. Gerät nach Anspruch 12, wobei das Format des Berichts die Energieeffizienz des Gebäudes zeigt.

14. Gerät nach Anspruch 12 oder Anspruch 13, wobei das Gerät einen Ausgangsanschluss zum Anschluss einer Leitung an einen Computer oder Drucker zum Ausdrucken des Berichts besitzt.

15. Gerät nach einem der vorhergehenden Ansprüche, wobei eine Kamera vorgesehen ist.

## Revendications

1. Outil autonome portable destiné à déterminer les exigences de chauffage ou de refroidissement d'une pièce spécifiée dans une habitation ou un autre bâtiment, l'outil comprenant la combinaison d'un dispositif de mesure de distance pour produire un signal de sortie indicatif de mesures linéaires et d'un microprocesseur comprenant un écran d'affichage, un clavier et une mémoire qui est préprogrammée avec :
(a) une liste prédéterminée de types de pièces ;
(b) une sélection prédéterminée des types de matériaux de construction utilisés pour la construction des murs, des sols, des plafonds, des toits ou d'autres éléments d'une pièce d'une habitation ou d'un autre bâtiment ;
(c) des valeurs de gradient de température prédéfinies pour différents types de pièces ; et
(d) des valeurs « U » typiques des matériaux présentés en (b),
dans lequel l'outil est configuré pour entrer le signal de sortie provenant du dispositif de mesure de distance directement dans la mémoire du microprocesseur.

2. Outil selon la revendication 1, dans lequel le microprocesseur est en outre préprogrammé avec
(a) un « facteur de ventilation » = 0,33 watt/m³ °C ; et
(b) des « renouvellements d'air » typiques pour les différents types de pièces établis en (a) à la revendication 1.

3. Outil selon la revendication 1 ou la revendication 2, dans lequel le dispositif de mesure de distance est solidaire du microprocesseur.

4. Outil selon la revendication 1 ou la revendication 2, dans lequel le dispositif de mesure de distance est détachable du microprocesseur.

5. Outil selon l'une quelconque des revendications 1 à 4, dans lequel le dispositif de mesure de distance est raccordé au microprocesseur au moyen d'un câble.

6. Outil selon l'une quelconque des revendications 1 à 4, dans lequel le dispositif de mesure de distance est câblé à une carte de circuit imprimé du microprocesseur.

7. Outil selon l'une quelconque des revendications 1 à 4, dans lequel le dispositif de mesure de distance est raccordé au microprocesseur au moyen d'une liaison de communication sans fil.

8. Outil selon l'une quelconque des revendications 1 à 7, dans lequel le dispositif de mesure de distance est un dispositif qui utilise un faisceau ultrasonore pour mesurer une distance et est opérationnel pour produire un signal de sortie indicatif de mesures linéaires.

9. Outil selon l'une quelconque des revendications 1 à 7, dans lequel le dispositif de mesure de distance est un dispositif qui utilise un faisceau infrarouge pour mesurer une distance et est opérationnel pour produire un signal de sortie indicatif de mesures linéaires.

10. Outil selon l'une quelconque des revendications 1 à 9, dans lequel le dispositif de mesure de distance comprend un générateur laser qui utilise un faisceau laser pour viser une surface vers laquelle le faisceau qui est utilisé pour mesurer des distances est dirigé.

11. Outil selon l'une quelconque des revendications 1 à 7, dans lequel le dispositif de mesure de distance est un dispositif qui utilise un faisceau laser pour mesurer une distance et est opérationnel pour produire un signal de sortie indicatif de mesures linéaires.

12. Outil selon l'une quelconque des revendications précédentes, dans lequel le microprocesseur comprend un moyen de formatage de données en format de rapport.

13. Outil selon la revendication 12, dans lequel le format du rapport montre le rendement énergétique du bâtiment.

14. Outil selon la revendication 12 ou la revendication 13, dans lequel l'outil comporte un port de sortie pour raccorder un fil à un ordinateur ou une imprimante pour imprimer le rapport.

15. Outil selon l'une quelconque des revendications précédentes, dans lequel une caméra est fournie.
